# EUROPEAN PATENT SPECIFICATION

(11) **EP 4 392 850 B1**
(45) Date of publication and mention of the grant of the patent: **19.03.2025**
(21) Application number: 22834770.4
(22) Date of filing: 11.11.2022
(51) Int. Cl.: G06F 1/3237, G06F 1/3234

(54) **DI/DT MANAGEMENT DURING CLOCK GATING**
DI/DT-VERWALTUNG WÄHREND EINER TAKTSTEUERUNG
GESTION DU DI/DT PENDANT UN PORTILLONNAGE D'HORLOGE

(43) Date of publication of application: 03.07.2024
(73) Proprietor: Google LLC, Mountain View, CA 94043 (US)
(72) Inventor: PRASAD, Janardan, Mountain View, California 94043 (US)
(74) Representative: Marks & Clerk GST
(86) International application number: PCT/US2022/049702
(87) International publication number: WO 2024/102141

(56) References cited:
- US-A1- 2003 141 901
- US-A1- 2019 278 357

## Description

### BACKGROUND

This specification relates to systems having integrated circuit devices.

A system on a chip (SoC) is an integrated circuit that integrates different components of a mobile computing device, including a central processing unit (CPU), memory, input/output ports, cellular radios, and secondary storage, and so on. In contrast to the traditional motherboard-based PC architecture, where a motherboard houses and connects detachable or replaceable components, SoCs integrate all these components into a single integrated circuit. SoCs are commonly used in mobile computing, edge computing, and embedded systems, such as smartphones, tablet computers, WiFi routers, Internet of Things (IoT) devices, and so on.

Clock gating is used in many circuits for reducing dynamic power dissipation, by removing the clock pulse when the circuit is not in use. Clock gating saves power by pruning the clock tree, in some cases, at the cost of adding more logic to a circuit. A SoC can include multiple devices that need clock gating. For example, when a device of the SoC does not need to work for some clock cycles (e.g., 10 clock cycles or 1 clock cycle), the system can determine to perform clock gating for the device, e.g., removing the clock pulse, or switching between "clock on" and "clock off" according to the requirements of that device. When the device needs to come back to work, the system can add back the clock pulse. Clock gating by removing and adding back clock pulses in a device causes changes in the current. Di/dt is the rate-of-change of the current and can be expressed in units of amps per second. A positive di/dt represents an increase in the current and a negative di/dt represents a decrease in the current.

However, when multiple subsystems or multiple components of a device need clock gating, clock gating can result in sudden change in the current requirement of the device. The sudden change in the current is referred to as di/dt noise or the di/dt effect, which is also known as surge current or in-rush current. High performance design of modem devices may require more frequent and higher amount of clock gating, which may result in higher di/dt noise. Thus, di/dt noise is becoming an important source of power supply noise in modem day chips. Di/dt effect increases when clock gating is performed on a significant part of the device.

Some systems can utilize higher noise margins during clock gating to mitigate the di/dt effect. To do so, the system can estimate a di/dt noise percentage and can allocate a sufficient amount of noise margin during which desired work cannot be performed. However, when a large amount of noise margin is allocated in a large size circuit, e.g., a high performance chip, there are fewer opportunities to save the power, e.g., by reducing the voltage or some other techniques. Thus, the system must operate at a lower speed. In addition, the system has to use higher noise margins because of the unpredictability of di/dt noise. The problem becomes more impactful when circuit size goes bigger, such as modern day devices with multiple CPU cores.

Some systems can stagger the clock gating of the multiple components of a device to mitigate the di/dt effect. Staggering is helpful when the clock of an entire component is being gated on or gated off. However, modern day devices may need to perform clock gating for a portion of a component and may need to perform many types of clock gating, e.g., fine grained clock gating, micro textual clock gating, etc. Thus, staggering cannot help when much complex clock gating is happening inside the multiple components of the device.

US 2019/278357 A1 discloses a system on chip (SoC) that includes a plurality of intellectual property (IP) blocks and a clock management unit (CMU) configured to perform clock gating on at least one of the IP blocks. The IP blocks and the CMU interface with one another using a full handshake method. The full handshake method may include at least one of the IP blocks sending a request signal to the CMU to begin providing a clock signal or to stop providing the clock signal, and the CMU sending an acknowledgement signal to the corresponding IP block in response to receipt of the request signal.

US 2003/141901 A1 discloses various systems and methods for reducing the power consumption of CSRs (Control and Status Registers) within an integrated circuit (IC) are disclosed. In one embodiment, an IC includes a plurality of CSRs. Each CSR includes one or more flip-flops that are used to store one or more bits of control and/or status information for an associated device on the IC. The IC also includes one or more clock gates. Each clock gate is coupled to provide a gated clock signal to one or more of the flip-flops in a respective one of the CSRs. Each clock gate is configured to output a clock signal as the gated clock signal if a clock enable signal that corresponds to the respective CSR is asserted. The IC also includes one or more clock gating units that are each configured to generate the clock enable signal for a respective one of the CSRs.

### SUMMARY

This specification describes technologies for di/dt management during clock gating of multiple computing devices in a system. The techniques use a centralized di/dt manager that can receive clock gating requests from the multiple computing devices and can determine to approve which of the clock gating requests such that the total clock gating value of the system is within a threshold.

The subject matter described in this specification can be implemented in particular embodiments so as to realize one or more of the following advantages. The techniques use a centralized di/dt manager to manage di/dt noise during clock gating of multiple computing devices in a device. The di/dt manager receives clock gating requests from the multiple computing devices and determines which of the clock gating requests to approve such that the total clock gating value of the device is within a threshold. Therefore, the techniques can control the di/dt noise to be within a limit and can reduce the noise margin in the device. Therefore, there are more opportunities to save the power, e.g., by lowering the voltage because power is directly proportional to the square of the voltage, or using other techniques, and the system can execute at a higher speed. The techniques can increase the frequency of operation and can finish a task earlier, saving the energy required for a task.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example system.
FIG. 2 is a flowchart of an example for di/dt management during clock gating.
FIG. 3 is a flowchart of an example for di/dt management during clock gating.

Like reference numbers and designations in the various drawings indicate like components.

### DETAILED DESCRIPTION

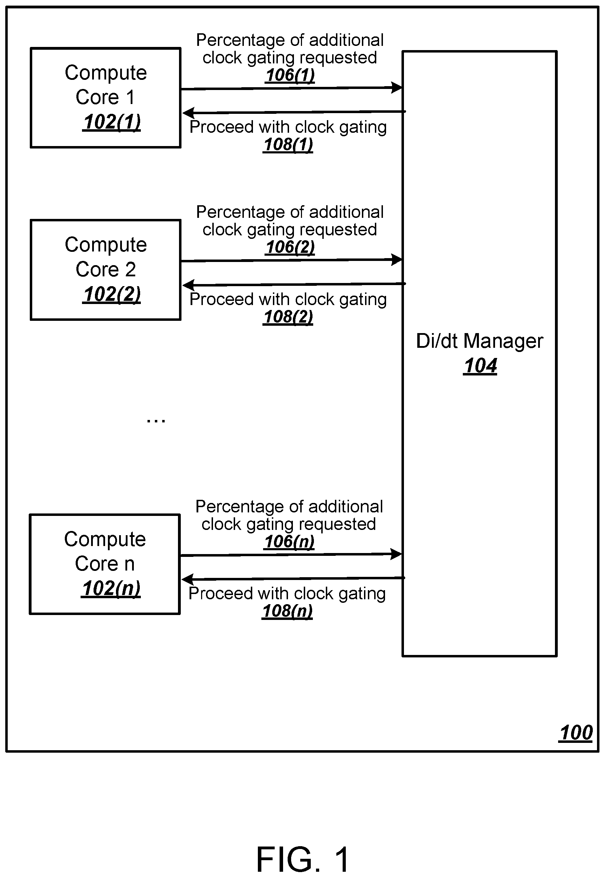

FIG. 1 is a diagram of an example system 100. The system 100 can include a system on a chip (SoC) device installed on a mobile device (e.g., a smart phone or a tablet). A SoC is an integrated circuit system that can include each component of the system on a single silicon substrate or on multiple interconnected dies, e.g., using silicon interposers, stacked dies, or interconnect bridges. Alternatively or in addition, the system 100 can be another type of device that uses centralized clock gating control.

The system 100 includes multiple computing devices, subsystems, or components. For example, the system 100 includes multiple compute cores, e.g., compute core 1 102(1), compute core 2 102(2), ..., compute core n 102 (n), (collectively, "compute cores 102"). For example, the compute cores can be central processing units (CPUs), graphics processing units (GPUs), digital signal processors (DSPs), machine learning tiles, image processors, or any other appropriate types of computing devices. Although the techniques are illustrated for the multiple compute cores 102, similar techniques are applicable to any kind of device which have multiple computing devices, subsystems, or components.

Each computing device, e.g., each compute core, has respective clock gating logic that is configured to apply clock gating to a portion of the computing device. Clock gating is a technique used in many circuits for reducing dynamic power dissipation, by removing, or holding steady, a clock pulse when the circuit is not in use. Clock gating saves power by pruning the clock tree, at the cost of adding more logic to a circuit. Some devices may need to perform clock gating for a portion of a component and may need to perform many types of clock gating, e.g., fine grained clock gating, micro textual clock gating, etc.

For example, a CPU core may not need to work for some clock cycles (e.g., 10 clock cycles , 5 clock cycles, or 1 clock cycle), the CPU core may desire to perform clock gating, e.g., removing the clock pulse according to the requirements of the CPU core. After a period of time, the CPU core may need to come back to work, and the CPU core may desire to end the clock gating, e.g., adding back the clock pulse according to the requirements of the CPU core. In some examples, a portion of the CPU core may not be required to work for some clock cycles.

Clock gating by removing and adding back clock pulses in a device causes changes in the current. Di/dt is the rate-of-change of the current and can be expressed in units of amps per second. A positive di/dt represents an increase in the current and a negative di/dt represents a decrease in the current. When multiple subsystems or multiple components of a device need clock gating, clock gating can result in sudden change in the current of the device. The sudden change in the current is referred to as di/dt noise or the di/dt effect, which is also known as surge current or in-rush current. High performance design of modem devices may require more frequent and higher amount of clock gating, which may result in higher di/dt noise. Thus, di/dt noise is becoming an important source of power supply noise in modem day chips. Di/dt effect increases when clock gating is performed on a significant part of the device.

The system 100 includes a centralized di/dt manager 104. The di/dt manager 104 can control the di/dt noise by managing clock gating requests from the multiple computing devices in the system 100. The di/dt manager 104 can control the di/dt noise to be within a limit and can reduce the noise margin in the system 100. Therefore, there are more opportunities to save the power, e.g., by reducing the voltage or some other techniques, and the system 100 can perform at a higher speed.

The di/dt manager 104 can receive, from the compute cores 102, respective clock gating requests 106(1), 106(2), ..., 106(n) (collectively, 106), to perform the clock gating. Each clock gating request 106 specifies a respective clock gating value representing how much of the requesting compute core will be clock gated. In some implementations, the clock gating value can represent a percentage of clock gating that a compute core desires to perform in a particular clock cycle.

For example, the CPU core 1 102(1) can be in an operating state at a first time point. At a second time point after the first time point, the CPU core 1 102(1) may determine that the number of instructions being processed by the core has reduced. The CPU core may determine to perform clock gating for a portion of the CPU core. The di/dt manager 104 can receive, from the CPU core 1 102(1), a clock gating request 106(1), to perform the clock gating. The clock gating request 106(1) can include a percentage, e.g., 50%, of clock gating that the CPU core 1 102(1) desires to perform in a particular clock cycle. In some implementations, the CPU core may be already under clock gating, and the clock gating request 106(1) can include a percentage, e.g., 25%, of additional clock gating that the CPU core 1 102(1) desires to perform in a particular clock cycle.

The di/dt manager 104 computes, from the clock gating requests 106, a total clock gating value of the system 100. For example, the di/dt manager 104 can compute the total clock gating value of the system 100 by calculating a sum of the respective percentage of additional clock gating requested. In some implementations, the di/dt manager 104 can calculate a weighted sum of the respective percentage of additional clock gating requested, and the weight can be proportional to a size of the computing device or a frequency of the computing device, or a combination of both.

The di/dt manager 104 determines, from the total clock gating value, which of the clock gating requests from the plurality of compute cores 102 to approve. The di/dt manager 104 can compare the total clock gating value to a clock gating threshold of the system 100. The clock gating threshold is the maximum amount of clock gating that can be allowed without severely impacting the performance of the system 100, e.g., without requiring high noise margins. The di/dt manager 104 can obtain the clock gating threshold after post silicon measurement and/or characterization, and can store the clock gating threshold in a register, e.g., a control and status registers (CSR) or any programmable register, included in the di/dt manager 104. In some implementations, the di/dt manager 104 can burn the clock gating threshold in fuses for production parts.

In some implementations, if the total clock gating value is less than the clock gating threshold, the di/dt manager 104 can approve the clock gating requests from all of the compute cores 102. In some implementations, if the total clock gating value is greater than the clock gating threshold, the di/dt manager 104 can approve the clock gating requests from fewer than all of the compute cores 102. In some implementations, the di/dt manager 104 can select a combination of the compute cores 102 whose clock gating values are less than the clock gating threshold, and can approve the clock gating requests from the selected combination of compute cores. Thus, the di/dt manager 104 can make sure that the total allowed clock gating is within a limit and can reduce the noise margin in the device.

The di/dt manager 104 provides the compute cores 102, responses 108(1), 108(2), ..., 108(n) (collectively, 108) to the respective clock gating requests 106. Each response 108 represents whether the clock gating request 106 is approved. For example, the di/dt manager 104 can provide the compute core 102(1) a response 108(1), and the response 108(1) can be "proceed with clock gating", representing that the clock gating request 106(1) is approved.

The communication between the di/dt manager 104 and the compute cores 102 can be implemented in various ways. In some implementations, the system 100 can include a physical interface for the communication. For example, the physical interface for the communication can include a set of signals between the compute cores 102 and the di/dt manager 104. The set of signals can inform the di/dt manager 104 the amount of clock gating a compute core is planning to do, and the set of signals can include approvals or rejections from the di/dt managers. In some implementations, the system 100 can include a virtual interface for the communication. For example, the system 100 can implement the communication between the compute cores 102 and the di/dt manager 104 via reading a status of one or more sensors, or via reading a status of one or more registers, without using a set of physical signals. In some implementations, the system 100, e.g., the di/dt manager 104, can include a plurality of status registers, e.g., control and status registers (CSR), and the status registers can store the request 106, the responses 108, or a combination of both. In some implementations, the system 100 can include a plurality of sensors, e.g., current sensors, for the communication between the di/dt manager 104 and the compute cores 102. Other implementations are also possible.

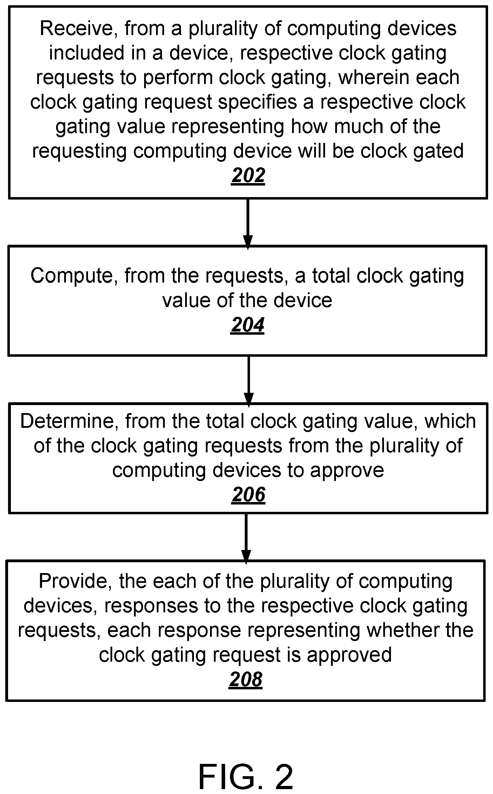

FIG. 2 is a flowchart of an example for di/dt management during clock gating. For convenience, the process will be described as being performed by the system 100 that includes a di/dt manager 104. The system can include the components described in reference to FIG. 1, including one or more computing devices, subsystems, components, or some combination of these.

The system receives, from a plurality of computing devices, respective clock gating requests to perform the clock gating (202). Each clock gating request specifies a respective clock gating value representing how much of the requesting computing device will be clock gated. In some implementations, each clock gating value can represent a percentage of a computing device that is to be clock gated. For example, each clock gating value can represent a percentage of clock gating each core 102 desires to perform during a clock cycle.

The system 100 can include the plurality of computing devices and a centralized di/dt manager. In some implementations, the centralized di/dt manager and the plurality of computing devices can be integrated on a single system on a chip. For example, the system 100 can be a system on a chip (SoC), and the SoC can include a di/dt manager and a plurality of computing devices, such as subsystems, components, computing devices, or a combination of these.

Each computing device can have respective clock gating logic that can be configured to apply clock gating to a portion of the computing device. In some implementations, each computing device can apply or perform the requested clock gating if and only if the centralized di/dt manager 104 has provided a response approving the clock gating request.

The system computes, from the clock gating requests, a total clock gating value of the device (204). In some implementations, each of the plurality of computing devices can be associated with a weight, and the system can compute the total clock gating value of the device by multiplying the clock gating value of each request by a respective weight from the requesting computing device. The weight from the requesting computing device can be stored in the di/dt manager, e.g., in a CSR register or any programmable register, of the di/dt manager. In some implementations, the weights can be burned in fuses for production parts.

In some implementations, the weight can be determined based on a size of the computing device, a frequency of the computing device, the voltage of operation and technology cells, or a combination of these. For example, the sizes of the cores 102 can be different. One core can be 1 square nanometer, and another core can be 0.1 square millimeter or 0.1 square micrometer. When the cores 102 are communicating the clock gating requests, the overall effect from the cores can be different. As another example, the frequencies of the cores 102 can be different. One core can be 1.5 GHz, and another core can be 5 GHz. When the cores 102 are communicating the clock gating requests, the overall effect from the cores can be different. In some implementations, the weights for each computing device can be determined after post silicon measurement and/or characterization.

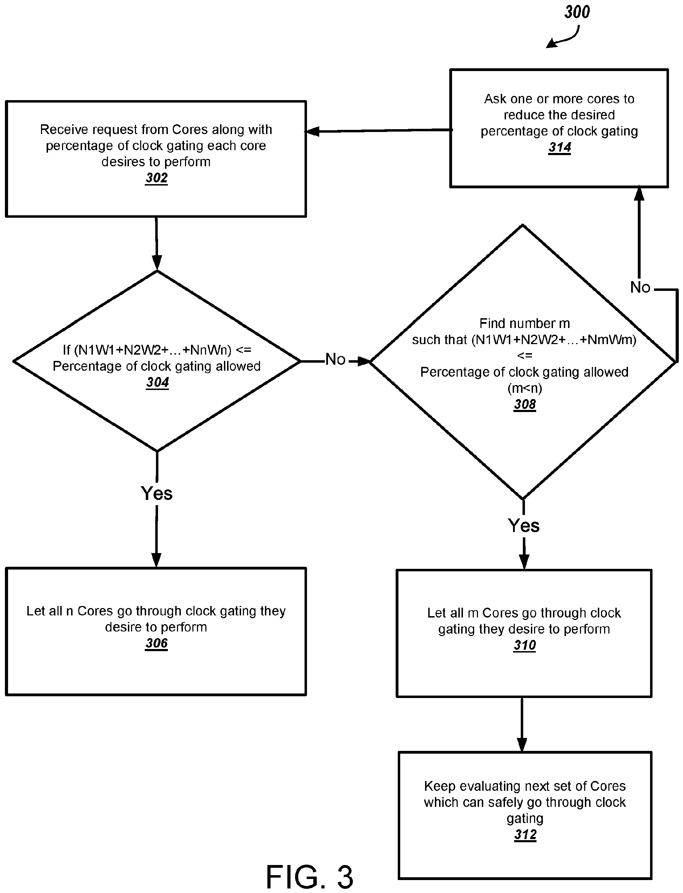

FIG. 3 is a flowchart of an example 300 for di/dt management during clock gating. A di/dt manager can receive requests from a plurality of computing devices, e.g., cores, along with percentage of clock gating each core desires to perform (302). The percentage of clock gating each core desires to perform can be N1, N2, ..., Nn, for a total of n cores indexed from 1 to n. The di/dt manager computes a total clock gating value of the cores (304). Each core can have a respective weight W1, W2, ..., Wn. The total clock gating value of the device can be a weighted sum of the percentage of clock gating each core desires to perform, e.g., N1W1+N2W2+...+NnWn.

Referring back to FIG. 2, the system determines, from the total clock gating value, which of the clock gating requests from the plurality of computing devices to approve (206). The system can compare the total clock gating value to a clock gating threshold of the device. The system can determine that the total clock gating value is less than the clock gating threshold, and in response, the system can approve the clock gating requests from all of the computing devices.

The system can compare the total clock gating value to a clock gating threshold of the device. The system can determine that the total clock gating value is greater than the clock gating threshold, and in response, the system can provide approvals to fewer than all of the plurality of computing devices. In some implementations, the system can select a combination of the plurality of computing devices whose clock gating values are less than the clock gating threshold, and can provide approvals to the selected combination of the plurality of computing devices.

The system provides, each of the plurality of computing devices, responses to the respective clock gating requests, each response representing whether the clock gating request is approved (208).

Referring to FIG. 3, the di/dt manager can compare the total clock gating value to a clock gating threshold of the device (304). For example, the di/dt manager can determine whether the total clock gating value, e.g., N1W1+N2W2+...+NnWn, satisfies a criterion, e.g., not larger than the percentage of clock gating allowed for the device.

The di/dt manager can include a CSR that stores the clock gating threshold of the device. In some implementations, the limit of allowed percentage of clock gating may change over time, and the di/dt manager can include a CSR that stores the clock gating threshold of the device at any given time point.

If N1W1+N2W2+...+NnWn is not larger than the percentage of clock gating allowed, the di/dt manager can let all n cores go through clock gating that they desire to perform (306). For example, the di/dt manager 104 can determine that the total clock gating value from all compute cores 102 is less than the clock gating threshold. In response, the di/dt manager 104 can approve the clock gating requests 106 from all the compute cores 102. The di/dt manager 104 can provide response 108 to all the cores 102, and each response can represent that the clock gating request is approved.

If N1W1+N2W2+...+NnWn is larger than the percentage of clock gating allowed, the di/dt manager can find a number m such that N1W1+N2W2+...+NmWm is not larger than the percentage of clock gating allowed for the device (308). Here, m is a positive integer that is smaller than the total number of cores n.

If the di/dt manager can find a number m such that N1W1+N2W2+...+NmWm is not larger than the percentage of clock gating allowed for the device, the di/dt manager can let all m cores go through clock gating that they desire to perform (310). In some cases, the di/dt manager can find only one core that can go through clock gating.

For example, the di/dt manager 104 can determine that the total clock gating value from all CPU cores 102 is larger than the clock gating threshold, and the total clock gating value from the CPU cores 102(1), 102(2), and 102(3) is not larger than the clock gating threshold. In response, the di/dt manager 104 can approve the clock gating requests 106 from the CPU cores 102(1), 102(2), and 102(3). The di/dt manager 104 can provide responses 108 to the CPU cores 102(1), 102(2), and 102(3), indicating that the respective clock gating request is approved. The di/dt manager 104 can provide responses 108 to the rest of the CPU cores, indicating that the respective clock gating request is not approved.

If the di/dt manager cannot find a number m (m is a positive integer smaller than n) such that N1W1+N2W2+...+NmWm is not larger than the percentage of clock gating allowed for the device, the di/dt manager can determine that none of the cores can go through clock gating. In some implementations, the di/dt manager can ask one or more cores to reduce the desired percentage of clock gating (314).

The di/dt manager can keep evaluating the next set of cores which can safely go through clock gating (312). For example, during the next clock cycle, the di/dt manager can reevaluate the compute cores 102(4), ..., 102(n) that were not approved for clock gating in the previous clock cycle. The di/dt manager can determine that the total clock gating value from the compute cores 102(4), ..., 102(n) is not larger than the clock gating threshold. In response, the di/dt manager 104 can approve the clock gating requests from the compute cores 102(4), ..., 102(n). The di/dt manager 104 can provide responses to the compute cores 102(4), ..., 102(n), indicating that the respective clock gating request is approved.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

Embodiments of the subject matter described in this specification can be implemented in a computing system that includes a back-end component, e.g., as a data server, or that includes a middleware component, e.g., an application server, or that includes a front-end component, e.g., a client device having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of the invention or on the scope of what is claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A device (100) comprising:
a plurality of computing devices (102(1), 102(2), 102(n)), wherein each computing device has respective clock gating logic that is configured to apply clock gating to a portion of the computing device; and
a centralized di/dt manager (104) that is configured to perform operations comprising:
receiving, from the plurality of computing devices, respective clock gating requests to perform the clock gating, wherein each clock gating request specifies a respective clock gating value representing how much of the requesting computing device will be clock gated,
computing, from the clock gating requests, a total clock gating value of the device,
determining, from the total clock gating value, which of the clock gating requests from the plurality of computing devices to approve, such that a total approved clock gating is less than a clock gating threshold of the device, and
providing, the each of the plurality of computing devices, responses to the respective clock gating requests, each response representing whether the clock gating request is approved.

2. The device of claim 1, wherein each computing device applies the requested clock gating if and only if the centralized di/dt manager has provided a response approving the clock gating request.

3. The device of claim 1, wherein determining which of the clock gating requests to approve comprises:
comparing the total clock gating value to the clock gating threshold of the device;
determining that the total clock gating value is less than the clock gating threshold; and
in response, approving the clock gating requests from all of the computing devices.

4. The device of claim **1,** wherein determining which of the clock gating requests to approve comprises:
comparing the total clock gating value to the clock gating threshold of the device;
determining that the total clock gating value is greater than the clock gating threshold; and
in response, providing approvals to fewer than all of the plurality of computing devices.

5. The device of claim 4, wherein providing the approvals to fewer than all of the plurality of computing devices comprises selecting a combination of the plurality of computing devices whose clock gating values are less than the clock gating threshold.

6. The device of claim 1, wherein each of the plurality of computing devices is associated with a weight, and wherein computing the total clock gating value of the device comprises multiplying the clock gating value of each request by a respective weight from the requesting computing device; and optionally:
wherein the weight is proportional to a size of the computing device or a frequency of the computing device.

7. The device of claim 1, wherein:
each clock gating value represents a percentage of a computing device that is to be clock gated; and/or
the centralized di/dt manager and the plurality of computing devices are integrated on a single system on a chip.

8. A method, comprising:
receiving, by a centralized di/dt manager included in a device and from a plurality of computing devices, respective clock gating requests to perform clock gating, wherein each computing device has respective clock gating logic that is configured to apply the clock gating to a portion of the computing device, wherein each clock gating request specifies a respective clock gating value representing how much of the requesting computing device will be clock gated (202);
computing, by the centralized di/dt manager and from the clock gating requests, a total clock gating value of the device (204);
determining, by the centralized di/dt manager and from the total clock gating value, which of the clock gating requests from the plurality of computing devices to approve (206), such that a total approved clock gating is less than a clock gating threshold of the device; and
providing, the each of the plurality of computing devices by the centralized di/dt manager, responses to the respective clock gating requests, each response representing whether the clock gating request is approved (208).

9. The method of claim 8, wherein each computing device applies the requested clock gating if and only if the centralized di/dt manager has provided a response approving the clock gating request.

10. The method of claim 8, wherein determining which of the clock gating requests to approve comprises:
comparing the total clock gating value to the clock gating threshold of the device;
determining that the total clock gating value is less than the clock gating threshold; and
in response, approving the clock gating requests from all of the computing devices.

11. The method of claim 8, wherein determining which of the clock gating requests to approve comprises:
comparing the total clock gating value to the clock gating threshold of the device;
determining that the total clock gating value is greater than the clock gating threshold; and
in response, providing approvals to fewer than all of the plurality of computing devices; and optionally:
wherein providing the approvals to fewer than all of the plurality of computing devices comprises selecting a combination of the plurality of computing devices whose clock gating values are less than the clock gating threshold.

12. The method of claim 8, wherein each of the plurality of computing devices is associated with a weight, and wherein computing the total clock gating value of the device comprises multiplying the clock gating value of each request by a respective weight from the requesting computing device; and optionally:
wherein the weight is proportional to a size of the computing device or a frequency of the computing device.

13. The method of claim 8, wherein:
each clock gating value represents a percentage of a computing device that is to be clock gated; and/or
the centralized di/dt manager and the plurality of computing devices are integrated on a single system on a chip.

14. One or more non-transitory storage media encoded with instructions that when executed by a centralized di/dt manager included in a device cause the di/dt manager to perform operations comprising:
receiving, from a plurality of computing devices, respective clock gating requests to perform clock gating, wherein each computing device has respective clock gating logic that is configured to apply the clock gating to a portion of the computing device, wherein each clock gating request specifies a respective clock gating value representing how much of the requesting computing device will be clock gated (202);
computing, from the clock gating requests, a total clock gating value of the device (204);
determining, from the total clock gating value, which of the clock gating requests from the plurality of computing devices to approve (206), such that a total approved clock gating is less than a clock gating threshold of the device; and
providing, the each of the plurality of computing devices, responses to the respective clock gating requests, each response representing whether the clock gating request is approved (208).

15. The non-transitory storage media of claim 14, wherein each computing device applies the requested clock gating if and only if the centralized di/dt manager has provided a response approving the clock gating request.

## Patentansprüche

1. Vorrichtung (100), umfassend:
eine Vielzahl von Rechenvorrichtungen (102(1), 102(2), 102(n)), wobei jede Rechenvorrichtung eine jeweilige Clock-Gating-Logik aufweist, die dazu konfiguriert ist, Clock-Gating auf einen Abschnitt der Rechenvorrichtung anzuwenden; und
einen zentralen DI/DT-Manager (104), der dazu konfiguriert ist, Operationen auszuführen, die Folgendes umfassen:
Empfangen jeweiliger Clock-Gating-Anforderungen zum Durchführen von Clock-Gating von der Vielzahl von Rechenvorrichtungen, wobei jede Clock-Gating-Anforderung einen jeweiligen Clock-Gating-Wert spezifiziert, der darstellt, wie viel von der anfordernden Rechenvorrichtung dem Clock-Gating unterzogen werden wird,
Berechnen eines Clock-Gating-Gesamtwertes der Vorrichtung aus den Clock-Gating-Anforderungen,
Bestimmen, ausgehend von dem Clock-Gating-Gesamtwert, welche der Clock-Gating-Anforderungen von der Vielzahl von Rechenvorrichtungen zu genehmigen ist, sodass eine Gesamtzahl von genehmigtem Clock-Gating kleiner als ein Clock-Gating-Schwellenwert der Vorrichtung ist, und
Bereitstellen von Antworten auf die jeweiligen Clock-Gating-Anforderungen für jede der Vielzahl von Rechenvorrichtungen, wobei jede Antwort darstellt, ob die Clock-Gating-Anforderung genehmigt ist.

2. Vorrichtung nach Anspruch 1, wobei jede Rechenvorrichtung das angeforderte Clock-Gating dann und nur dann anwendet, wenn der zentralisierte DI/DT-Manager eine Antwort bereitgestellt hat, die die Clock-Gating-Anforderung genehmigt.

3. Vorrichtung nach Anspruch 1, wobei das Bestimmen, welche der Clock-Gating-Anforderungen zu genehmigen ist, Folgendes umfasst:
Vergleichen des Clock-Gating-Gesamtwerts mit dem Clock-Gating-Schwellenwert der Vorrichtung;
Bestimmen, dass der Clock-Gating-Gesamtwert kleiner als der Clock-Gating-Schwellenwert ist; und
als Reaktion darauf, Genehmigen der Clock-Gating-Anforderungen von allen Rechenvorrichtungen.

4. Vorrichtung nach Anspruch 1, wobei das Bestimmen, welche der Clock-Gating-Anforderungen zu genehmigen ist, Folgendes umfasst:
Vergleichen des Clock-Gating-Gesamtwerts mit dem Clock-Gating-Schwellenwert der Vorrichtung;
Bestimmen, dass der Clock-Gating-Gesamtwert größer als der Clock-Gating-Schwellenwert ist; und
als Reaktion darauf, Bereitstellen von Genehmigungen für weniger als alle der Vielzahl von Rechenvorrichtungen.

5. Vorrichtung nach Anspruch 4, wobei das Bereitstellen der Genehmigungen für weniger als alle der Vielzahl von Rechenvorrichtungen Auswählen einer Kombination der Vielzahl von Rechenvorrichtungen umfasst, deren Clock-Gating-Werte kleiner als der Clock-Gating-Schwellenwert sind.

6. Vorrichtung nach Anspruch 1, wobei jeder der Vielzahl von Rechenvorrichtungen ein Gewicht zugeordnet ist, und wobei das Berechnen des Clock-Gating-Gesamtwerts der Vorrichtung Multiplizieren des Clock-Gating-Werts jeder Anforderung mit einem jeweiligen Gewicht von der anfordernden Rechenvorrichtung umfasst; und optional:
wobei das Gewicht proportional zu einer Größe der Rechenvorrichtung oder einer Frequenz der Rechenvorrichtung ist.

7. Vorrichtung nach Anspruch 1, wobei:
jeder Clock-Gating-Wert einen Prozentsatz einer Clock-Gating zu unterziehenden Rechenvorrichtung darstellt; und/oder
der zentralisierte DI/DT-Manager und die Vielzahl von Rechenvorrichtungen auf einem einzigen System auf einem Chip integriert sind.

8. Verfahren, umfassend:
Empfangen jeweiliger Clock-Gating-Anforderungen zum Durchführen von Clock-Gating durch einen zentralisierten in einer Vorrichtung beinhalteten DI/DT-Manager und von einer Vielzahl von Rechenvorrichtungen, wobei jede Rechenvorrichtung eine jeweilige Clock-Gating-Logik aufweist, die dazu konfiguriert ist, Clock-Gating auf einen Abschnitt der Rechenvorrichtung anzuwenden, wobei jede Clock-Gating-Anforderung einen jeweiligen Clock-Gating-Wert spezifiziert, der darstellt, wie viel von der anfordernden Rechenvorrichtung dem Clock-Gating unterzogen werden wird (202);
Berechnen eines Clock-Gating-Gesamtwerts der Vorrichtung (204) durch den zentralisierten DI/DT-Manager und aus den Clock-Gating-Anforderungen;
Bestimmen, durch den zentralisierten DI/DT-Manager und ausgehend von dem Clock-Gating-Gesamtwert, welche der Clock-Gating-Anforderungen von der Vielzahl von Rechenvorrichtungen zu genehmigen (206) ist, sodass eine Gesamtzahl von genehmigtem Clock-Gating kleiner als ein Clock-Gating-Schwellenwert der Vorrichtung ist; und
Bereitstellen von Antworten auf die jeweiligen Clock-Gating-Anforderungen für jede der Vielzahl von Rechenvorrichtungen durch den zentralisierten DI/DT-Manager, wobei jede Antwort darstellt, ob die Clock-Gating-Anforderung genehmigt ist (208) .

9. Verfahren nach Anspruch 8, wobei jede Rechenvorrichtung das angeforderte Clock-Gating dann und nur dann anwendet, wenn der zentralisierte DI/DT-Manager eine Antwort bereitgestellt hat, die die Clock-Gating-Anforderung genehmigt.

10. Verfahren nach Anspruch 8, wobei das Bestimmen, welche der Clock-Gating-Anforderungen zu genehmigen ist, Folgendes umfasst:
Vergleichen des Clock-Gating-Gesamtwerts mit dem Clock-Gating-Schwellenwert der Vorrichtung;
Bestimmen, dass der Clock-Gating-Gesamtwert kleiner als der Clock-Gating-Schwellenwert ist; und
als Reaktion darauf, Genehmigen der Clock-Gating-Anforderungen von allen Rechenvorrichtungen.

11. Verfahren nach Anspruch 8, wobei das Bestimmen, welche der Clock-Gating-Anforderungen zu genehmigen ist, Folgendes umfasst:
Vergleichen des Clock-Gating-Gesamtwerts mit dem Clock-Gating-Schwellenwert der Vorrichtung;
Bestimmen, dass der Clock-Gating-Gesamtwert größer als der Clock-Gating-Schwellenwert ist; und
als Reaktion darauf, Bereitstellen von Genehmigungen für weniger als alle der Vielzahl von Rechenvorrichtungen; und
optional:
wobei das Bereitstellen der Genehmigungen für weniger als alle der Vielzahl von Rechenvorrichtungen Auswählen einer Kombination der Vielzahl von Rechenvorrichtungen umfasst, deren Clock-Gating-Werte kleiner als der Clock-Gating-Schwellenwert sind.

12. Verfahren nach Anspruch 8, wobei jeder der Vielzahl von Rechenvorrichtungen ein Gewicht zugeordnet ist, und wobei das Berechnen des Clock-Gating-Gesamtwerts der Vorrichtung Multiplizieren des Clock-Gating-Werts jeder Anforderung mit einem jeweiligen Gewicht von der anfordernden Rechenvorrichtung umfasst; und optional:
wobei das Gewicht proportional zu einer Größe der Rechenvorrichtung oder einer Frequenz der Rechenvorrichtung ist.

13. Verfahren nach Anspruch 8, wobei:
jeder Clock-Gating-Wert einen Prozentsatz einer Clock-Gating zu unterziehenden Rechenvorrichtung darstellt; und/oder
der zentralisierte DI/DT-Manager und die Vielzahl von Rechenvorrichtungen auf einem einzigen System auf einem Chip integriert sind.

14. Ein oder mehrere nicht-transitorische Speichermedien, die mit Anweisungen codiert sind, die bei Ausführung durch einen in einer Vorrichtung beinhalteten zentralisierten DI/DT-Manager den DI/DT-Manager zum Durchführen von Operationen veranlassen, die Folgendes umfassen:
Empfangen jeweiliger Clock-Gating-Anforderungen zum Durchführen von Clock-Gating von einer Vielzahl von Rechenvorrichtungen, wobei jede Rechenvorrichtung eine jeweilige Clock-Gating-Logik aufweist, die dazu konfiguriert ist, Clock-Gating auf einen Abschnitt der Rechenvorrichtung anzuwenden, wobei jede Clock-Gating-Anforderung einen jeweiligen Clock-Gating-Wert spezifiziert, der darstellt, wie viel von der anfordernden Rechenvorrichtung dem Clock-Gating unterzogen werden wird (202);
Berechnen eines Clock-Gating-Gesamtwertes der Vorrichtung aus den Clock-Gating-Anforderungen (204);
Bestimmen, ausgehend von dem Clock-Gating-Gesamtwert, welche der Clock-Gating-Anforderungen von der Vielzahl von Rechenvorrichtungen zu genehmigen (206) ist, sodass eine Gesamtzahl von genehmigtem Clock-Gating kleiner als ein Clock-Gating-Schwellenwert der Vorrichtung ist; und
Bereitstellen von Antworten auf die jeweiligen Clock-Gating-Anforderungen für jede der Vielzahl von Rechenvorrichtungen, wobei jede Antwort darstellt, ob die Clock-Gating-Anforderung genehmigt ist (208).

15. Nicht-flüchtiges Speichermedium nach Anspruch 14, wobei jede Rechenvorrichtung das angeforderte Clock-Gating dann und nur dann anwendet, wenn der zentralisierte DI/DT-Manager eine Antwort bereitgestellt hat, die die Clock-Gating-Anforderung genehmigt.

## Revendications

1. Dispositif (100) comprenant :
une pluralité de dispositifs informatiques (102(1), 102(2), 102(n)), dans lequel chaque dispositif informatique a une logique de portillonnage d'horloge respective qui est configurée pour appliquer un portillonnage d'horloge à une partie du dispositif informatique ; et
un gestionnaire di/dt centralisé (104) qui est configuré pour réaliser des opérations comprenant :
la réception, à partir de la pluralité de dispositifs informatiques, de demandes de portillonnage d'horloge respectives pour réaliser le portillonnage d'horloge, dans lequel chaque demande de portillonnage d'horloge spécifie une valeur de portillonnage d'horloge respective représentant la quantité du dispositif informatique demandeur qui sera portillonnée d'horloge,
le calcul, à partir des demandes de portillonnage d'horloge, d'une valeur totale de portillonnage d'horloge du dispositif,
la détermination, à partir de la valeur totale de portillonnage d'horloge, de laquelle des demandes de portillonnage d'horloge provenant de la pluralité de dispositifs informatiques doit être approuvée, de telle sorte qu'un portillonnage d'horloge total approuvé soit inférieur à un seuil de portillonnage d'horloge du dispositif, et
la fourniture, à chacun de la pluralité de dispositifs informatiques, de réponses aux demandes de portillonnage d'horloge respectives, chaque réponse indiquant si la demande de portillonnage d'horloge est approuvée.

2. Dispositif selon la revendication 1, dans lequel chaque dispositif informatique applique le portillonnage d'horloge demandé si et seulement si le gestionnaire di/dt centralisé a fourni une réponse approuvant la demande de portillonnage d'horloge.

3. Dispositif selon la revendication 1, dans lequel la détermination de laquelle des demandes de portillonnage d'horloge doit être approuvée comprend :
la comparaison de la valeur totale de portillonnage d'horloge au seuil de portillonnage d'horloge du dispositif ;
le fait de déterminer que la valeur totale de portillonnage d'horloge est inférieure au seuil de portillonnage d'horloge ; et
en réponse, le fait d'approuver les demandes de portillonnage d'horloge provenant de tous les dispositifs informatiques.

4. Dispositif selon la revendication 1, dans lequel la détermination de laquelle des demandes de portillonnage d'horloge doit être approuvée comprend :
la comparaison de la valeur totale de portillonnage d'horloge au seuil de portillonnage d'horloge du dispositif ;
le fait de déterminer que la valeur totale de portillonnage d'horloge est supérieure au seuil de portillonnage d'horloge ; et
en réponse, la fourniture d'approbations à moins de la totalité de la pluralité des dispositifs informatiques.

5. Dispositif selon la revendication 4, dans lequel la fourniture des approbations à moins de la totalité de la pluralité de dispositifs informatiques comprend la sélection d'une combinaison de la pluralité de dispositifs informatiques dont les valeurs de portillonnage d'horloge sont inférieures au seuil de portillonnage d'horloge.

6. Dispositif selon la revendication 1, dans lequel chacun de la pluralité de dispositifs informatiques est associé à un poids, et dans lequel le calcul de la valeur totale de portillonnage d'horloge du dispositif comprend la multiplication de la valeur de portillonnage d'horloge de chaque demande par un poids respectif provenant du dispositif informatique demandeur ; et éventuellement :
dans lequel le poids est proportionnel à une taille du dispositif informatique ou à une fréquence du dispositif informatique.

7. Dispositif selon la revendication 1, dans lequel :
chaque valeur de portillonnage d'horloge représente un pourcentage d'un dispositif informatique qui doit être portillonné d'horloge ; et/ou
le gestionnaire di/dt centralisé et la pluralité de dispositifs informatiques sont intégrés sur un seul système sur puce.

8. Procédé, comprenant :
la réception, par un gestionnaire di/dt centralisé inclus dans un dispositif et à partir d'une pluralité de dispositifs informatiques, de demandes de portillonnage d'horloge respectives pour réaliser un portillonnage d'horloge, dans lequel chaque dispositif informatique a une logique de portillonnage d'horloge respective qui est configurée pour appliquer le portillonnage d'horloge à une partie du dispositif informatique, dans lequel chaque demande de portillonnage d'horloge spécifie une valeur de portillonnage d'horloge respective représentant la quantité du dispositif informatique demandeur qui sera portillonnée d'horloge (202) ;
le calcul, par le gestionnaire di/dt centralisé et à partir des demandes de portillonnage d'horloge, d'une valeur totale de portillonnage d'horloge du dispositif (204) ;
la détermination, par le gestionnaire di/dt centralisé et à partir de la valeur totale de portillonnage d'horloge, de laquelle des demandes de portillonnage d'horloge provenant de la pluralité de dispositifs informatiques doit être approuvée (206), de telle sorte qu'un portillonnage d'horloge total approuvé soit inférieur à un seuil de portillonnage d'horloge du dispositif ; et
la fourniture, à chacun de la pluralité de dispositifs informatiques par le gestionnaire di/dt centralisé, de réponses aux demandes de portillonnage d'horloge respectives, chaque réponse indiquant si la demande de portillonnage d'horloge est approuvée (208).

9. Procédé selon la revendication 8, dans lequel chaque dispositif informatique applique le portillonnage d'horloge demandé si et seulement si le gestionnaire di/dt centralisé a fourni une réponse approuvant la demande de portillonnage d'horloge.

10. Procédé selon la revendication 8, dans lequel la détermination de laquelle des demandes de portillonnage d'horloge doit être approuvée comprend :
la comparaison de la valeur totale de portillonnage d'horloge au seuil de portillonnage d'horloge du dispositif ;
le fait de déterminer que la valeur totale de portillonnage d'horloge est inférieure au seuil de portillonnage d'horloge ; et
en réponse, le fait d'approuver les demandes de portillonnage d'horloge provenant de tous les dispositifs informatiques.

11. Procédé selon la revendication 8, dans lequel la détermination de laquelle des demandes de portillonnage d'horloge doit être approuvée comprend :
la comparaison de la valeur totale de portillonnage d'horloge au seuil de portillonnage d'horloge du dispositif ;
le fait de déterminer que la valeur totale de portillonnage d'horloge est supérieure au seuil de portillonnage d'horloge ; et
en réponse, la fourniture d'approbations à moins de la totalité de la pluralité des dispositifs informatiques ; et
éventuellement :
dans lequel la fourniture des approbations à moins de la totalité de la pluralité de dispositifs informatiques comprend la sélection d'une combinaison de la pluralité de dispositifs informatiques dont les valeurs de portillonnage d'horloge sont inférieures au seuil de portillonnage d'horloge.

12. Procédé selon la revendication 8, dans lequel chacun de la pluralité de dispositifs informatiques est associé à un poids, et dans lequel le calcul de la valeur totale de portillonnage d'horloge du dispositif comprend la multiplication de la valeur de portillonnage d'horloge de chaque demande par un poids respectif provenant du dispositif informatique demandeur ; et éventuellement :
dans lequel le poids est proportionnel à une taille du dispositif informatique ou à une fréquence du dispositif informatique.

13. Procédé selon la revendication 8, dans lequel :
chaque valeur de portillonnage d'horloge représente un pourcentage d'un dispositif informatique qui doit être portillonné d'horloge ; et/ou
le gestionnaire di/dt centralisé et la pluralité de dispositifs informatiques sont intégrés sur un seul système sur puce.

14. Un ou plusieurs supports de stockage non transitoires codés avec des instructions qui, lorsqu'elles sont exécutées par un gestionnaire di/dt centralisé inclus dans un dispositif, amènent le gestionnaire di/dt à réaliser des opérations comprenant :
la réception, à partir d'une pluralité de dispositifs informatiques, de demandes de portillonnage d'horloge respectives pour réaliser un portillonnage d'horloge, dans lequel chaque dispositif informatique a une logique de portillonnage d'horloge respective qui est configurée pour appliquer le portillonnage d'horloge à une partie du dispositif informatique, dans lequel chaque demande de portillonnage d'horloge spécifie une valeur de portillonnage d'horloge respective représentant la quantité du dispositif informatique demandeur qui sera portillonnée d'horloge (202) ;
le calcul, à partir des demandes de portillonnage d'horloge, d'une valeur totale de portillonnage d'horloge du dispositif (204) ;
la détermination, à partir de la valeur totale de portillonnage d'horloge, de laquelle des demandes de portillonnage d'horloge provenant de la pluralité de dispositifs informatiques doit être approuvée (206), de telle sorte qu'un portillonnage d'horloge total approuvé soit inférieur à un seuil de portillonnage d'horloge du dispositif ; et
la fourniture, à chacun de la pluralité de dispositifs informatiques, de réponses aux demandes de portillonnage d'horloge respectives, chaque réponse indiquant si la demande de portillonnage d'horloge est approuvée (208).

15. Support de stockage non transitoire selon la revendication 14, dans lequel chaque dispositif informatique applique le portillonnage d'horloge demandé si et seulement si le gestionnaire di/dt centralisé a fourni une réponse approuvant la demande de portillonnage d'horloge.
